# EUROPÄISCHE PATENTSCHRIFT

(11) **EP 2 942 366 B1**
(45) Veröffentlichungstag und Bekanntmachung des Hinweises auf die Patenterteilung: **25.10.2017**
(21) Anmeldenummer: 15155822.8
(22) Anmeldetag: 19.02.2015
(51) Int. Cl.: C08J 9/00, A43B 13/02, C08J 9/10, A43B 13/18

(54) **MATERIAL MIT EINER GESCHÄUMTEN POLYMERMATRIX**
MATERIAL HAVING A FOAMED POLYMER MATRIX
MATÉRIAU COMPORTANT UNE MATRICE POLYMÈRE EXPANSÉE

(30) Priorität: 08.05.2014 DE 102014106430
(43) Veröffentlichungstag der Anmeldung: 11.11.2015
(73) Patentinhaber: Nora Systems GmbH, 69469 Weinheim (DE)
(72) Erfinder: Schmitt, Jürgen, 64653 Lorsch (DE); Raffel, Stefan, 69493 Hirschberg (DE); Schüle, Hanna, 64646 Heppenheim (DE); Kröger, Mario, 76646 Bruchsal (DE)
(74) Vertreter: Reiser & Partner Patentanwälte mbB

(56) Entgegenhaltungen:
- EP-A1- 1 142 697
- EP-A2- 1 264 673
- DE-A1- 4 226 988
- DE-C- 885 004
- US-A- 2 740 743
- US-A- 3 546 143
- US-A- 3 630 819
- US-A- 3 836 487
- DATABASE WPI Week 199143 Thomson Scientific, London, GB; AN 1991-314639 XP002742745, -& JP 2 918265 B2 (TOYO RUBBER IND CO LTD) 12. Juli 1999 (1999-07-12)
- DATABASE WPI Week 199901 Thomson Scientific, London, GB; AN 1999-002847 XP002742746, -& JP 3 270387 B2 (ASICS CORP) 20. Oktober 1998 (1998-10-20)
- DATABASE WPI Week 200061 Thomson Scientific, London, GB; AN 2000-631135 XP002742747, -& JP 2000 225638 A (ASAHI KASEI KOGYO KK) 15. August 2000 (2000-08-15)

## Beschreibung

Die Erfindung betrifft ein Material enthaltend eine geschäumte Polymermatrix, die wenigstens ein Polymer enthält, das eine Innensohle für Schuhe bildet oder Teil einer Innensohle für Schuhe ist, sowie ein Verfahren zur Herstellung einer Innensohle für Schuhe.

Materialien enthaltend eine geschäumte Polymermatrix sind bekannt und werden unter anderem bereits für Schuhinnensohlen eingesetzt. Nachteilig ist bei bekannten Materialien, gerade bei der Anwendung in Schuhen, dass es abhängig von der jeweiligen Benutzung zu einer unerwünschten Vermehrung von Bakterien und anderen Keimen sowie zu einer damit einhergehenden Geruchsbelastung kommen kann. Daher ist in der Vergangenheit bereits vorgeschlagen worden, ein geschäumtes Material mit Silberionen auszustatten. Auf diese Weise soll der Vermehrung von Bakterien, Pilzen und Viren entgegengewirkt werden.

Die DE 885 004 C beschreibt ein Phenolaldehydharz mit Zellstruktur, in dem zerkleinerte Walnussschalen enthalten sind.

Die US 2,740,743 beschreibt ein geschäumtes Harz, in dem zerkleinerte Walnussschalen enthalten sind.

Die US 3,546,143 beschreibt ein geschäumtes Produkt, das zerkleinerte Walnussschalen enthält. Die US 3,630,819 beschreibt ein Laminat auf der Basis von geschäumtem Polyurethan, das zerkleinerte Walnussschalen enthält.

Die US 3,836,487 beschreibt ebenfalls ein Laminat auf der Basis von geschäumtem Polyurethan, in dem zerkleinerte Walnussschalen enthalten sind.

Die DE 42 26 988 A1 beschreibt ein Formteil aus einem geschäumten Kunstharz, in dem zerkleinerte Walnussschalen enthalten sind.

Die JP 2918265 B2 beschreibt ein geschäumtes Gummi-Material für einen Reifen, in dem zerkleinerte Walnussschalen enthalten sind.

Die JP 3270387 B2 beschreibt eine geschäumte Schuhsohle, die zerkleinerte Walnussschalen enthält, wodurch insbesondere die Haftung auf nassen Oberflächen verbessert werden soll.

Die JP 2000 225638 A beschreibt ein geschäumtes Formteil aus unter anderem Polyethylen, in dem zerkleinerte Walnussschalen enthalten sind.

Die EP 1142697 A1 beschreibt ein weiteres geschäumtes Formteil aus unter anderem einem thermoplastischen Harz, in dem zerkleinerte Walnussschalen enthalten sind.

Die EP 1264673 A2 beschreibt ein Verfahren zur Herstellung von geschäumten Kunststoffen, die optional zerkleinerte Walnussschalen enthalten können.

Die Erfindung stellt sich die Aufgabe, ein hochwertiges geschäumtes Material anzugeben, das eine Innensohle für Schuhe bildet oder Teil einer Innensohle für Schuhe ist, und das kostengünstig hergestellt werden kann und antimikrobielle Eigenschaften aufweist. Darüber hinaus stellt sich die Erfindung die Aufgabe, ein Verfahren zur Herstellung einer Innensohle anzugeben.
Die Aufgabe wird bei einem Material mit den Merkmalen von Anspruch 1 gelöst. Demnach ist bei einem eingangs genannten Material vorgesehen, dass in der Polymermatrix Partikel aus zerkleinerten Walnussschalen enthalten sind. Versuche haben gezeigt, dass dieses Material überraschenderweise sehr gute antimikrobielle Eigenschaften aufweist. Die antimikrobiellen Eigenschaften können beispielsweise anhand der DIN EN ISO 20743:2013 oder dem Japanese Industrial Standard JIS L 1902:2008 überprüft werden. Darüber hinaus weist das Material auch verbesserte mechanische Eigenschaften, wie insbesondere eine höhere Rückstellkraft auf. Außerdem kann eine gute und dauerhafte Elastizität und Polsterwirkung erreicht werden. Zudem ist vorteilhaft, dass die Partikel aus Walnussschalen nachwachsende Rohstoffe sind. Die Partikel können durch Mahlen von Walnussschalen gewonnen werden. Zudem stehen gemahlene Walnussschalen kostengünstig zur Verfügung. Mit den Partikeln aus Walnussschalen können die Eigenschaften des geschäumten Materials erheblich verbessert werden. Darüber hinaus wirken die Partikel aus Walnussschalen auch als Füllstoff. Auf diese Weise kann der Anteil des Polymers und/oder anderer Füllstoffe in dem fertigen Material reduziert werden. Ein weiterer Vorteil des Materials ist seine gute Haltbarkeit und seine Hautverträglichkeit. Daher eignet sich das Material besonders gut für Schuhinnensohlen. Eine vorteilhafte Ausgestaltung der Erfindung sieht vor, dass die Polymermatrix auf 100 Gewichtsteile Polymer zwischen 1 und 50 Gewichtsteile Partikel aus zerkleinerten Walnussschalen enthält. Vorzugsweise sind auf 100 Gewichtsteile Polymer zwischen 5 und 30 Gewichtsteile Partikel aus zerkleinerten Walnussschalen, besonders bevorzugt zwischen 10 und 25 Gewichtsteile Partikel aus zerkleinerten Walnussschalen enthalten.

Es hat sich als besonders vorteilhaft herausgestellt, wenn die Größe der Partikel aus zerkleinerten Walnussschalen derart ist, dass wenigstens 90 Gewichtsprozent der Partikel kleiner als 500 µm sind. Vorzugsweise sind wenigstens 90 Gewichtsprozent der Partikel kleiner als 220 µm. Besonders bevorzugt ist, wenn wenigstens 90 Gewichtsprozent der Partikel kleiner als 150 µm sind. Die Größe der Partikel kann durch Siebanalyse ermittelt werden. Beispielsweise können durch einen Sieb mit einer Maschenweite von 500 µm Partikel kleiner als 500 µm von Partikeln, die größer als 500 µm sind, getrennt werden. Durch Wiegen der Siebfraktionen kann bestimmt werden, ob 90 Gewichtsprozent der Partikel kleiner als 500 µm sind.

Nach einer vorteilhaften Ausgestaltung der Erfindung ist vorgesehen, dass das Material zunächst als eine Platte ausgebildet ist. Aus einer Platte des Materials können beispielsweise Schuhsohlen oder Teile hiervon sowie orthopädische Polsterelemente durch Ausschneiden oder Ausstanzen hergestellt sein. Vorzugsweise liegt die Dicke der Platte zwischen 1 mm und 50 mm. Solche Platten können zunächst als dickere Platten hergestellt und dann auf die gewünschte Dicke gespalten werden. Es hat sich gezeigt, dass sich das Material besonders für diesen Einsatzbereich eignet, seine vorteilhaften Eigenschaften können aber auch in anderen Bereichen zum Einsatz kommen. Insbesondere ist die Platte als Schuhinnensohlenplatte ausgebildet, da erfindungsgemäß vorgesehen ist, dass das Material eine Innensohle für Schuhe bildet oder Teil einer Innensohle für Schuhe ist.

Darüber hinaus kann das Material in vorteilhafter Weise einen orthopädischen Artikel bilden oder Teil eines orthopädischen Artikels sein. Insbesondere kann das Material als eine orthopädische Innensohle ausgebildet sein.

Eine vorteilhafte Ausführungsform der Erfindung sieht vor, dass die Dichte des Materials zwischen 0,05 g/cm³ und 0,8 g/cm³ liegt. Besonders bevorzugt wird hierbei eine Dichte des Materials zwischen 0,05 g/cm³ und 0,4 g/cm³; ein solches Material ist für eine Schuhinnensohle besonders geeignet. Weiterhin ist erfindungsgemäß bevorzugt, dass die Härte des Materials zwischen 5 Shore A und 80 Shore A liegt. Vorzugsweise liegt die Härte zwischen 10 Shore A und 40 Shore A. Die Shore-Härte kann nach DIN ISO 7619-1 ermittelt werden.
Erfindungsgemäß kann weiterhin in vorteilhafter Weise vorgesehen sein, dass die Partikel aus zerkleinerten Walnussschalen in die Polymermatrix eingebettet sind. Vorzugsweise sind die Partikel aus zerkleinerten Walnussschalen vollständig in die Polymermatrix eingebettet.
Darüber hinaus ist von Vorteil, wenn die Polymermatrix Ethylenvinylacetat (EVA) und/oder Styrol-Butadien-Kautschuk (SBR) und/oder Polyethylen (PE) und/oder Polyurethan (PU) enthält. EVA ist ein besonders hautfreundliches und langlebiges Material.
Weiterhin hat sich als vorteilhaft erwiesen, wenn die geschäumte Polymermatrix einen geschlossenzelligen Schaumstoff bildet. Dieser kann insbesondere durch Verwendung von Ethylenvinylacetat (EVA), Styrol-Butadien-Kautschuk (SBR) oder Polyethylen (PE) als Polymer erreicht werden.
Die erfindungsgemäße Aufgabe wird bei einem Verfahren mit den Merkmalen von Anspruch 8 gelöst. Demnach ist das Verfahren zur Herstellung einer Innensohle für Schuhe dadurch gekennzeichnet, dass die Polymermatrix bereitgestellt wird, dass in die Polymermatrix die Partikel aus zerkleinerten Walnussschalen eingemischt werden und dass die Polymermatrix danach aufgeschäumt wird, um die geschäumte Polymermatrix zu erzeugen.

Nach einer vorteilhaften Ausgestaltung der Erfindung ist vorgesehen, dass die Polymermatrix in eine Form eingebracht wird, bevor die Polymermatrix in der Form aufgeschäumt wird. Auf diese Weise kann das Material in der gewünschten Form, insbesondere als Platte, hergestellt werden. Vorzugsweise wird eine geschlossene Form verwendet. Diese kann insbesondere eine plattenförmige Kavität aufweisen.

Vorzugsweise erfolgt die Aufschäumung durch chemisches Aufschäumen. Hierzu wir der Polymermatrix ein Treibmittel zugegeben. Durch Wärmezufuhr spaltet sich ein flüchtiger Bestandteil des Treibmittels ab, wodurch ein Aufschäumen der Schmelze erreicht wird.

Weiterhin ist vorteilhaft, wenn die Polymermatrix einen Füllstoff aufweist. Besonders geeignet sind hierfür z.B. Kreide und/oder Kieselsäure. Der Füllstoff ermöglicht unter anderem auch, die Härte des Materials einzustellen.

Von Vorteil weist die Polymermatrix einen Vernetzer auf, der die schnelle Vernetzung des Polymers nach dem Aufschäumen ermöglicht. Der jeweilige Vernetzer wird passend zu dem verwendeten Polymer ausgewählt.

Vorteilhaft ist weiterhin, wenn die Polymermatrix Pigmente aufweist, mit denen die Polymermatrix eingefärbt werden kann.

Weitere Ziele, Merkmale, Vorteile und Anwendungsmöglichkeiten der vorliegenden Erfindung ergeben sich aus der nachfolgenden Beschreibung von Ausführungsbeispielen sowie der Zeichnung. Dabei bilden alle beschriebenen und/oder bildlich dargestellten Merkmale für sich oder in beliebiger sinnvoller Kombination den Gegenstand der Erfindung, auch unabhängig von der Zusammenfassung in einzelnen Ansprüchen oder deren Rückbeziehungen.

Es zeigen:
- Fig. 1:: Eine beispielhafte Platte;
- Fig. 2:: Eine erfindungsgemäße Einlegesohle;

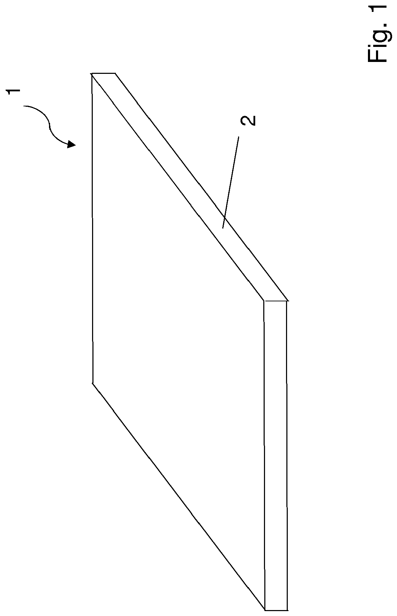

Figur 1 zeigt eine beispielhafte Platte 1. Die Platte besteht aus einem Material 2, das eine geschäumte Polymermatrix umfasst. In der Polymermatrix sind Partikel aus gemahlenen Walnussschalen eingebettet.
Die Polymermatrix enthält im dargestellten Ausführungsbeispiel Ethylenvinylacetat (EVA). Die Polymermatrix ist geschäumt und bildet einen geschlossenzelligen Schaumstoff. Die Polymermatrix kann neben oder alternativ zu Ethylenvinylacetat (EVA) auch Styrol-Butadien-Kautschuk (SBR) und/oder Polyethylen (PE) enthalten.
Die Partikel aus zerkleinerten Walnussschalen sind in die Polymermatrix eingebettet. Dies wird dadurch erreicht, dass bei der Herstellung die Partikel aus gemahlenen Walnussschalen in die Polymermatrix eingemischt werden, bevor die Polymermatrix aufgeschäumt und vernetzt wird.
Die Partikel aus zerkleinerten Walnussschalen werden zum Beispiel dadurch hergestellt, dass Walnussschalen gemahlen werden.
Die Größe der Partikel aus zerkleinerten Walnussschalen ist derart bemessen, dass wenigstens 90 Gewichtsprozent der Partikel kleiner als 500 µm sind. Vorzugsweise sind wenigstens 90 Gewichtsprozent der Partikel kleiner als 220 µm. Besonders bevorzugt ist, wenn wenigstens 90 Gewichtsprozent der Partikel kleiner als 150 µm sind. Die Größe der Partikel kann durch Siebanalyse ermittelt werden. Beispielsweise können durch einen Sieb mit einer Maschenweite von 500 µm Partikel kleiner als 500 µm von Partikeln, die größer als 500 µm sind, getrennt werden. Durch Wiegen der Siebfraktionen kann dann bestimmt werden, ob 90 Gewichtsprozent der Partikel kleiner als 500 µm sind.

Die dargestellte Platte 1 kann insbesondere als eine Schuhsohlenplatte ausgebildet sein. Aus einer Schuhsohlenplatte können durch Ausschneiden oder Ausstanzen Schuhsohlen oder Teile hiervon, wie Absätze, abgeteilt werden. Dabei kann die Platte 1 als Schuhinnensohlenplatte ausgebildet sein, aus der erfindungsgemäß Schuhinnensohlen hergestellt werden können. Die Schuhinnensohlen können beispielsweise als Einlegesohlen ausgebildet sein.
Die Platte 1 kann insbesondere auch für orthopädische Artikel, wie zum Beispiel orthopädische Sohlen und orthopädische Aufbau- und Polstermaterialien verwendet werden.
Die Dichte des Materials 2 der Platte 1 liegt zwischen 0,05 g/cm³ und 0,8 g/cm³. Vorzugsweise liegt die Dichte zwischen 0,05 g/cm³ und 0,4 g/cm³. Ein solches Material 2 ist besonders gut als Innensohle geeignet. Gleichfalls bevorzugt ist der Bereich von 0,5 g/cm³ bis 0,85 g/cm³. Ein solches Material 2 eignet sich beispielsweise besonders gut für Laufsohlen. Die Härte des Materials 2 beträgt zwischen 5 Shore A und 80 Shore A. Die Shore-Härte kann nach der DIN ISO 7619-1 ermittelt werden.
Die Dicke der Platte beträgt zwischen 1 mm und 50 mm. Für die Anwendung im Bereich Schuhe und orthopädische Artikel sind Dicken der Platte zwischen 2 mm und 10 mm besonders vorteilhaft. Die Seitenlängen der Platte 1 liegen in vorteilhafter Weise zwischen 10 cm und 200 cm, vorzugsweise zwischen 20 cm und 100 cm.

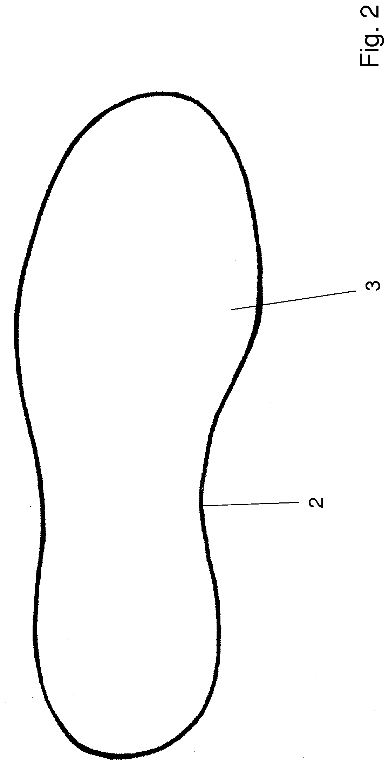

Figur 2 zeigt schematisch eine erfindungsgemäße Innensohle 3 aus dem beschriebenen Material 2 für Schuhe. Die Innensohle 3 kann aus der Platte 1 durch Ausschneiden oder Ausstanzen hergestellt werden.
Nachfolgend wird das Herstellungsverfahren zur Herstellung des Materials 2 enthaltend eine geschäumte Polymermatrix, wobei in der Polymermatrix Partikel aus zerkleinerten Walnussschalen enthalten sind, kurz beschrieben. In einem ersten Schritt wird eine Polymermatrix bereitgestellt. Diese kann Ethylenvinylacetat (EVA), Styrol-Butadien-Kautschuk (SBR) Polyethylen (PE) und/oder Polyurethan (PU) enthalten. In einem zweiten Schritt werden in die Polymermatrix Partikel aus zuvor zerkleinerten Walnussschalen eingebracht. In einem dritten Schritt wird die Polymermatrix in eine Form eingebracht. Die Form kann beispielsweise eine plattenförmige Kavität haben, um die Platte 1 herzustellen. Die Form wird dann geschlossen, um in einem vierten Schritt die Polymermatrix in der Form aufzuschäumen. Hierbei wird Wärme zugeführt. Durch Wärmezufuhr spalten sich flüchtige Bestandteile eines in die Polymermatrix enthaltenen Treibmittels ab, was zum Aufschäumen der Polymermatrix führt. In der Form wird auch die Vernetzung des Polymers durchgeführt. Danach kann das fertige geschäumte Material aus der Form entnommen werden.

Nachfolgend werden drei Ausführungsbeispiele für die Polymermatrix beschrieben.

### Ausführungsbeispiel 1

Nach einem ersten Ausführungsbeispiel enthält die Polymermatrix folgende Komponenten. Angegeben sind jeweils die Gewichtsteile. Die Angabe Polymer 100 und Walnussschalen 20 bedeutet beispielsweise, dass auf 100 kg Polymer 20 kg Partikel aus Walnussschalen kommen.

| **Polymermatrix** | |
|---|---|
| Polymer | 100 |
| Zerkleinerte Walnussschalen | 20 |
| Kreide | 20 |
| Kieselsäure | - |
| Zinkoxid | 3 |
| Treibmittel | 10,5 |
| Vernetzer | 1,8 |
| Titandioxid | 2 |
| Eisenoxid rot | 0,3 |
| Eisenoxid gelb | 1,8 |

Die Dichte eines solchen Materials beträgt 0,1 g/cm³ bei einer Härte von 20 Shore A.

### Ausführungsbeispiel 2

Nach einem zweiten Ausführungsbeispiel enthält die Polymermatrix folgende Komponenten:

| **Polymermatrix** | |
|---|---|
| Polymer | 100 |
| Zerkleinerte Walnussschalen | 20 |
| Kreide | 15 |
| Kieselsäure | 15 |
| Zinkoxid | 3 |
| Treibmittel | 3 |
| Vernetzer | 1,5 |
| Titandioxid | 1 |
| Eisenoxid rot | 0,15 |
| Eisenoxid gelb | 0,4 |

Die Dichte eines solchen Materials beträgt 0,2 g/cm³ bei einer Härte von 40 Shore A.

### Ausführungsbeispiel 3

Nach einem dritten Ausführungsbeispiel enthält die Polymermatrix folgende Komponenten:

| **Polymermatrix** | |
|---|---|
| Polymer | 100 |
| Zerkleinerte Walnussschalen | 20 |
| Kreide | - |
| Kieselsäure | 35 |
| Zinkoxid | 3 |
| Treibmittel | 2 |
| Vernetzer | 2 |
| Titandioxid | 2,9 |
| Eisenoxid rot | 0,4 |
| Eisenoxid gelb | 1,1 |

Die Dichte eines solchen Materials beträgt 0,4 g/cm³ bei einer Härte von 70 Shore A.

Die in der Polymermatrix enthaltene Kreide beziehungsweise Kieselsäure haben im Wesentlichen die Funktion von Füllstoffen. Diese beeinflussen auch die Härte des Materials. Als Treibmittel kann beispielsweise ein exothermes Treibmittel, wie beispielsweise Azodicarbonamid (ADC) verwendet werden. Das in der Rezeptur angegebene Zinkoxid hat im Wesentlichen die Funktion eines Aktivators für das Treibmittel. Der Vernetzer kann je nach gewähltem Polymer ausgewählt werden. Beispielsweise kann für SBR ein Schwefel-Vernetzer eingesetzt werden und für EVA ein Peroxid-Vernetzer

Die weiteren aufgeführten Bestandteile Titandioxid, Eisenoxid rot und Eisenoxid gelb dienen der farblichen Gestaltung des Materials. Bei der angegebenen Mischung ergibt sich ein Farbton ähnlich der Hautfarbe, wie er für orthopädische Produkte und Sohlen eingesetzt wird.

## Patentansprüche

1. Material (2) enthaltend eine geschäumte Polymermatrix, die wenigstens ein Polymer enthält, wobei in der Polymermatrix Partikel aus zerkleinerten Walnussschalen enthalten sind, **dadurch gekennzeichnet, dass** das Material (2) eine Innensohle für Schuhe bildet oder Teil einer Innensohle für Schuhe ist.

2. Material nach Anspruch 1, **dadurch gekennzeichnet, dass** die Dichte des Materials (2) zwischen 0,05 g/cm³ und 0,8 g/cm³ liegt.

3. Material nach Anspruch 1 oder 2, **dadurch gekennzeichnet, dass** die Härte des Materials (2) zwischen 5 Shore A und 80 Shore A liegt.

4. Material nach einem der Ansprüche 1 bis 3, **dadurch gekennzeichnet, dass** die Polymermatrix auf 100 Gewichtsteile Polymer zwischen 1 und 50 Gewichtsteile der Partikel aus zerkleinerten Walnussschalen enthält.

5. Material nach einem der Ansprüche 1 bis 4, **dadurch gekennzeichnet, dass** die mittels Siebanalyse ermittelte Größe der Partikel aus zerkleinerten Walnussschalen derart ist, dass wenigstens 90 Gewichtsprozent der Partikel kleiner als 500 µm sind.

6. Material nach einem der Ansprüche 1 bis 5, **dadurch gekennzeichnet, dass** die Polymermatrix das Polymer Ethylenvinylacetat und/oder Styrol-Butadien-Kautschuk und/oder Polyethylen und/oder Polyurethan enthält.

7. Material nach einem der Ansprüche 1 bis 6, **dadurch gekennzeichnet, dass** die geschäumte Polymermatrix einen geschlossenzelligen Schaumstoff bildet.

8. Verfahren zur Herstellung einer Innensohle für Schuhe, die eine geschäumte Polymermatrix enthält, **dadurch gekennzeichnet, dass** die geschäumte Polymermatrix dadurch hergestellt wird, dass eine Polymermatrix, die wenigstens ein Polymer enthält, bereitgestellt wird, dass in die Polymermatrix Partikel aus zerkleinerten Walnussschalen eingemischt werden und dass die Polymermatrix danach aufgeschäumt wird, um die geschäumte Polymermatrix zu erzeugen.

9. Verfahren nach Anspruch 8, **dadurch gekennzeichnet, dass** die Polymermatrix in eine Form eingebracht wird, bevor die Polymermatrix in der Form aufgeschäumt wird.

10. Verwendung eines Materials (2) enthaltend eine geschäumte Polymermatrix, die wenigstens ein Polymer enthält, wobei in der geschäumten Polymermatrix Partikel aus zerkleinerten Walnussschalen enthalten sind, für eine Innensohle für Schuhe.

## Claims

1. Material (2) containing a foamed polymer matrix, which contains at least one polymer, wherein the polymer matrix contains particles of comminuted walnut shells, **characterized in that** the material (2) forms an inner sole for shoes or is part of an inner sole for shoes.

2. Material according to claim 1, **characterized in that** the density of the material (2) is between 0.05 g/cm³ and 0.8 g/cm³.

3. Material according to either claim 1 or claim 2, **characterized in that** the hardness of the material (2) is between 5 Shore A and 80 Shore A.

4. Material according to any of claims 1 to 3, **characterized in that** the polymer matrix contains between 1 and 50 parts by weight of the particles of comminuted walnut shells per 100 parts by weight polymer.

5. Material according to any of claims 1 to 4, **characterized in that** the size of the particles of comminuted walnut shells, which is determined by sieve analysis, is such that at least 90 percent by weight of the particles are smaller than 500 µm.

6. Material according to any of claims 1 to 5, **characterized in that** the polymer matrix contains the polymer ethylene vinyl acetate and/or styrene butadiene rubber and/or polyethylene and/or polyurethane.

7. Material according to any of claims 1 to 6, **characterized in that** the foamed polymer matrix forms a closed-cell foam.

8. Method for manufacturing an inner sole for shoes, which contains a foamed polymer matrix, **characterized in that** the foamed polymer matrix is manufactured **in that** a polymer matrix, which contains at least one polymer, is provided, **in that** particles of comminuted walnut shells are mixed into the polymer matrix, and **in that** the polymer matrix is subsequently foamed so as to produce the foamed polymer matrix.

9. Method according to claim 8, **characterized in that** the polymer matrix is introduced into a mould before the polymer matrix is foamed in the mould.

10. Use of a material (2) containing a foamed polymer matrix, which contains at least one polymer, wherein particles of comminuted walnut shells are contained in the foamed polymer matrix, for an inner sole for shoes.

## Revendications

1. Matériau (2) contenant une matrice polymère moussée, qui contient au moins un polymère, dans lequel des particules à base de coquilles de noix divisées sont contenues dans la matrice polymère, **caractérisé en ce que** le matériau (2) forme une semelle intérieure pour chaussures ou est une partie d'une semelle intérieure pour chaussures.

2. Matériau selon la revendication 1, **caractérisé en ce que** la densité du matériau (2) se situe entre 0,05 g/cm³ et 0,8 g/cm³.

3. Matériau selon la revendication 1 ou 2, **caractérisé en ce que** la dureté du matériau se situe entre Shore A de 5 et Shore A de 80.

4. Matériau selon l'une des revendications 1 à 3, **caractérisé en ce que** la matrice polymère contient, par rapport à 100 parties en poids de polymère, entre 1 et 50 parties en poids de particules à base de coquilles de noix divisées.

5. Matériau selon l'une des revendications 1 à 4, **caractérisé en ce que** taille des particules à base de coquilles de noix divisées au moyen d'une analyse par tamisage est telle qu'au moins 90 pourcents en poids des particules sont inférieures à 500 µm.

6. Matériau selon l'une des revendications 1 à 5, **caractérisé en ce que** la matrice polymère contient le polymère d'éthylène vinylacétate et/ou du caoutchouc styrène-butadiène et/ou du polyéthylène et/ou du polyuréthane.

7. Matériau selon l'une des revendications 1 à 6, **caractérisé en ce que** la matrice polymère moussée forme une mousse à cellules fermées.

8. Procédé de fabrication d'une semelle intérieure pour chaussures, qui contient une matrice polymère moussée, **caractérisé en ce que** la matrice polymère moussée est fabriquée **en ce qu'**une matrice polymère, qui contient au moins un polymère, est mise au point, que des particules à base de coquilles de noix divisées sont mélangées dans la matrice polymère et qu'ensuite la matrice polymère est moussée afin de créer la matrice polymère moussée.

9. Procédé selon la revendication 8, **caractérisé en ce que** la matrice polymère est disposée dans un moule avant que la matrice polymère ne soit moussée dans le moule.

10. Utilisation d'un matériau (2), contenant une matrice polymère moussée, qui contient au moins un polymère, où des particules de coquille de noix divisées sont contenues dans la matrice polymère moussée, pour une semelle intérieure pour chaussures.
